# EUROPEAN PATENT APPLICATION

(11) **EP 2 897 205 A2**
(43) Date of publication of application: **22.07.2015**
(21) Application number: 13836423.7
(22) Date of filing: 10.09.2013
(51) Int. Cl.: H01M 10/04, H01M 10/058, H01M 2/14, H01M 10/052

(54) **WRAPPED ELECTRODE ASSEMBLY AND METHOD FOR MANUFACTURING SAME**

(30) Priority: 11.09.2012 KR 20120100329
(71) Applicant: Routejade Inc., Chungcheongnam-do 320-844 (KR)
(72) Inventor: KIM, In Joong, Nonsan-si Chungcheongnam-do 320-030 (KR); JUNG, Young Ho, Gyeryong-si Chungcheongnam-do 321-763 (KR)
(74) Representative: Von Kreisler Selting Werner - Partnerschaft von Patentanwälten und Rechtsanwälten mbB
(86) International application number: PCT/KR2013/008160
(87) International publication number: WO 2014/042397

(57) **Abstract**

A wrapping electrode assembly according to an exemplary embodiment of the present invention for use in a secondary battery manufactured by an electrode-stacking method includes: an electrode plate which has a coating layer of an electrode active material and a non-coated protruding portion, the electrode active material being capable of reversibly inserting and extracting lithium ions; first and second separators which cover both surfaces of the electrode plate while exposing only the non-coated protruding portion; and an insulating polymer film which is placed on any one outer surface of the first separator and the second separator at least on a portion of a circumference of the electrode plate to bond the first separator and the second separator, and, thus, it is not necessary for both surfaces of the insulating polymer film to contain an adhesive component.

## Description

### [Technical Field]

The present invention relates to a wrapping electrode assembly used in a secondary battery and a method for manufacturing the same, and more particularly, to a wrapping electrode assembly in which when an electrode plate is wrapped with a separator, an insulating polymer film is positioned on an outer surface of the separator facing the electrode plate and a method for manufacturing the same.

### [Background Art]

As the markets for portable electronic devices such as mobile phones, camcorders and notebook computers have been expanded and diversified, the demand for a rechargeable secondary battery for power supply has also been increasing. Due to miniaturization, weight-lightening, high performance, and multiple functions of portable electronic devices, a secondary battery used as a power supply source has been required to be continuously improved in energy storage density. Therefore, years of research to meet such a requirement have yielded the current lithium ion secondary battery that adopts a carbon anode into and from which lithium can be reversibly inserted and extracted and a cathode material into and from which lithium can be reversibly inserted and extracted.

The lithium ion secondary battery has a higher energy density per unit weight and increased charge and discharge lifetime as compared with the existing aqueous solution type secondary batteries such as nickel-cadmium and nickel-hydrogen secondary batteries, and thus has been recently substituted as a new energy source for portable electronic devices for the existing batteries. However, along with the rapid development and diversification of portable electronic devices, a demand for batteries with a higher energy density and various sizes is rapidly increasing. Thus, the current lithium ion secondary battery does not meet such a demand.

In particular, the rapid trend to manufacture slim and small electronic devices increases demands for slim lithium ion secondary batteries having a small thickness. However, adoption of the existing manufacturing methods for cylindrical or prismatic lithium ion secondary batteries may cause drastic lowering of energy density per volume in manufacturing slim batteries. Therefore, it is considered that the development of a slim lithium ion secondary battery with a higher energy density per unit volume is essential in achieving miniaturization, weight-lightening, and slimming of various portable electronic devices.

In order to increase an energy density per unit volume of a secondary battery, it is necessary to accurately laminate or stack a cathode plate, a separator, and an anode plate. That is, it is necessary to laminate or stack an electrode plate while an area of the anode plate is maintained to be greater than a coating area of a cathode active material on the cathode plate. If an active material coating portion on the cathode plate is not accurately positioned within the anode plate while the cathode plate and the anode plate are laminated or stacked, the performance of the battery may deteriorate.

Therefore, a demand for a secondary battery or an electrode which makes it possible to increase productivity while maintaining an alignment state of a cathode plate and an anode plate has been increased.

### [Disclosure]

### [Technical Problem]

The present invention is suggested to solve the above-described problem, and provides a wrapping electrode assembly in which alignment of electrode plates can be maintained while the electrode plates are laminated or stacked alternately and a method for manufacturing the same.

The present invention provides a wrapping electrode assembly which does not need an insulating polymer film of which both surfaces are coated with an adhesive component and a method for manufacturing the same.

The present invention provides a wrapping electrode assembly in which a contact state between a separator and electrode plates can be firmly maintained and a method for manufacturing the same.

### [Technical Solution]

According to an exemplary embodiment of the present invention to achieve the above-described object, there is provided a wrapping electrode assembly for use in a secondary battery manufactured by an electrode-stacking method, the wrapping electrode assembly including: an electrode plate which has a coating layer of an electrode active material and a non-coated protruding portion, the electrode active material being capable of reversibly inserting and extracting lithium ions; first and second separators which cover both surfaces of the electrode plate while exposing only the non-coated protruding portion; and an insulating polymer film which is placed on any one outer surface of the first separator and the second separator at least on a portion of a circumference of the electrode plate to bond the first separator and the second separator.

With this configuration, it is not necessary for both surfaces of the insulating polymer film to contain an adhesive component.

At least one of the first separator or the second separator may include a bending portion at a part of an edge.

The insulating polymer film may be formed so as to be positioned on the bending portion.

The insulating polymer film may be formed so as not to be protruded beyond the bending portion or so as not to be protruded beyond the separator including the bending portion.

The insulating polymer film contains an adhesive component that bonds the first separator and the second separator, and the adhesive component infiltrates into the first separator or the second separator and thus bonds the first separator and the second separator.

The electrode plate coated by the first separator and the second separator may be formed to have a size smaller than that of another electrode plate which is not coated by the first separator and the second separator.

The first separator or the second separator may be formed to have the maximum projected area so as to be equivalent to that of the another electrode plate.

The insulating polymer film may include any one selected from the group consisting of a polyolefin resin film, a polyester resin film, a polystyrene resin film, a polyimide film, a polyamide film, a fluorocarbon resin film, an ABS film, a polyacrylic film, an acetal-based film, and a polycarbonate film.

The insulating polymer film may contain any one adhesive component selected from a high temperature fused adhesive group consisting of ethylene vinyl acetate, ethylene ethyl acetate, an ethylene acrylic acid-based compound, an ionomer-based compound, polyethylene, polyvinylacetate, and polyvinylbutyral.

Meanwhile, according to another aspect of the present invention, the present invention may provide a method for manufacturing a wrapping electrode assembly for use in a secondary battery manufactured by an electrode-stacking method, the method including: a step of preparing a plurality of electrode plates having the same shape, each of which has a coating layer of an electrode active material and a non-coated protruding portion, the electrode active material being capable of reversibly inserting and extracting lithium ions; a step of removing a part of a tape-shaped insulating polymer film containing an adhesive component in order to form a space where the electrode plates are accommodated as being aligned with a uniform gap; a step of positioning the electrode plates between tape-shaped first separator and second separator so as to expose only non-coated protruding portions of the electrode plates and coat the other portions of the electrode plates; a step of aligning the electrode plates with a uniform gap within a punched space of the polymer film; a step of allowing the insulating polymer film and the separators to pass through a pressure roller while heating the insulating polymer film and the separators; and a step of obtaining a plurality of wrapping electrode assembly in which the first separator and the second separator are bonded by the insulating polymer film at least on a part of an outer circumference of the electrode plate.

The insulating polymer film may include any one selected from the group consisting of a polyolefin resin film, a polyester resin film, a polystyrene resin film, a polyimide film, a polyamide film, a fluorocarbon resin film, an ABS film, a polyacrylic film, an acetal-based film, and a polycarbonate film.

The insulating polymer film may contain any one adhesive component selected from a high temperature fused adhesive group consisting of ethylene vinyl acetate, ethylene ethyl acetate, an ethylene acrylic acid-based compound, an ionomer-based compound, polyethylene, polyvinylacetate, and polyvinylbutyral.

### [Advantageous Effects]

As described above, the wrapping electrode assembly and the method for manufacturing the same according to the present invention make it possible to easily maintain alignment between the electrodes while the electrode plates are laminated or stacked alternately.

The wrapping electrode assembly and the method for manufacturing the same according to the present invention can reduce production cost since it is not necessary to coat both surfaces of the insulating polymer film with the adhesive component.

In the wrapping electrode assembly and the method for manufacturing the same according to the present invention, the insulating polymer film on an outer surface of the separator brings the separator that coats one surface of the electrode plate into close contact with the electrode plates, and, thus, it is possible to firmly maintain a contact state between the separator and the electrode plates.

In the wrapping electrode assembly and the method for manufacturing the same according to the present invention, even if the insulating polymer film that bonds the separator on an outer surface of the separator has a thickness smaller than a thickness of the electrode plates, it is possible to laminate or stack using the electrode plates in a close contact state, and, thus, it is possible to reduce an amount of the insulating polymer film needed.

### [Description of Drawings]

FIG. 1 is an exploded perspective view schematically illustrating a secondary battery including a wrapping electrode assembly according to an exemplary embodiment of the present invention;
FIG. 2 is a perspective view illustrating the wrapping electrode assembly according to the exemplary embodiment of the present invention;
FIG. 3 to FIG. 5 are diagrams illustrating a process for manufacturing a wrapping electrode assembly according to an exemplary embodiment of the present invention;
FIG. 6 is a plane view illustrating the wrapping electrode assembly according to the exemplary embodiment of the present invention;
FIG. 7 is a cross-sectional view taken along a line VII-VII of FIG. 6; and
FIG. 8 is a diagram provided to compare the wrapping electrode assembly according to the exemplary embodiment of the present invention with a non-wrapped electrode plate.

### [Best Mode]

Hereinafter, exemplary embodiments of the present invention will be described in detail with reference to the accompanying drawings. However, the present invention will not be limited to the following exemplary embodiments. The same reference numerals in each drawing represent the same elements, respectively.

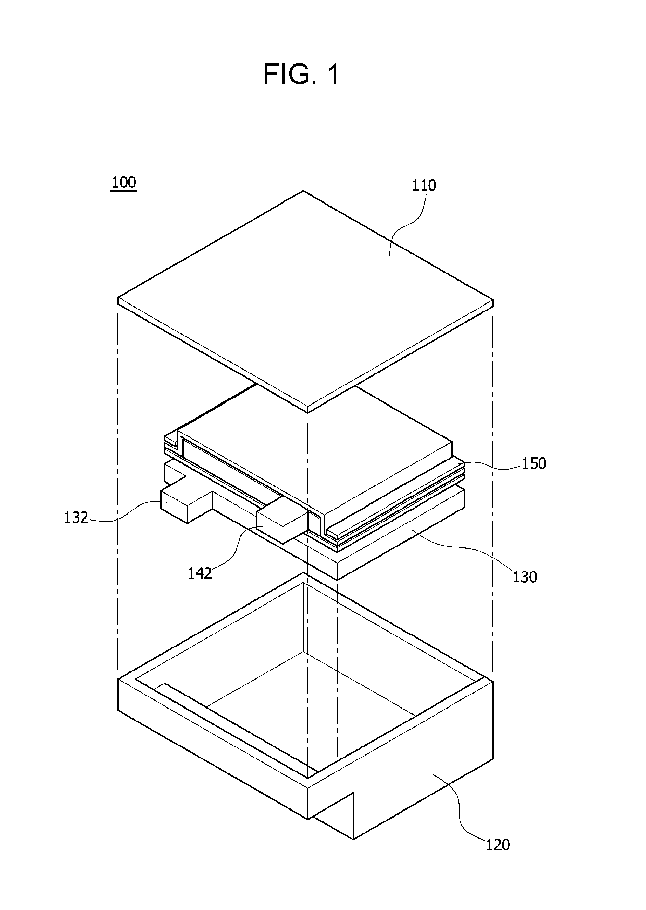

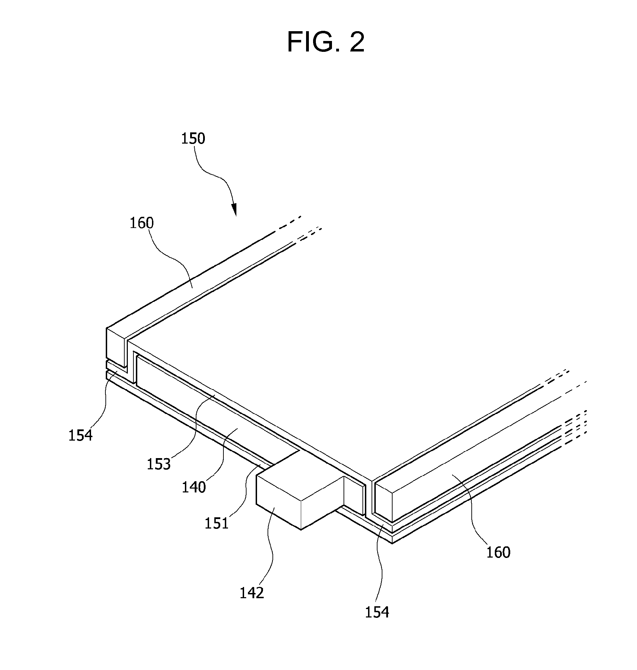

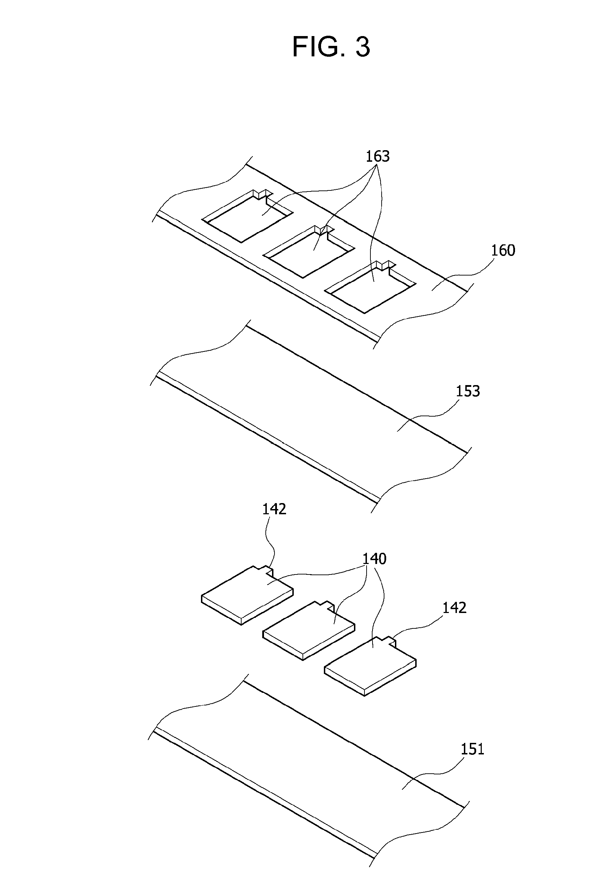

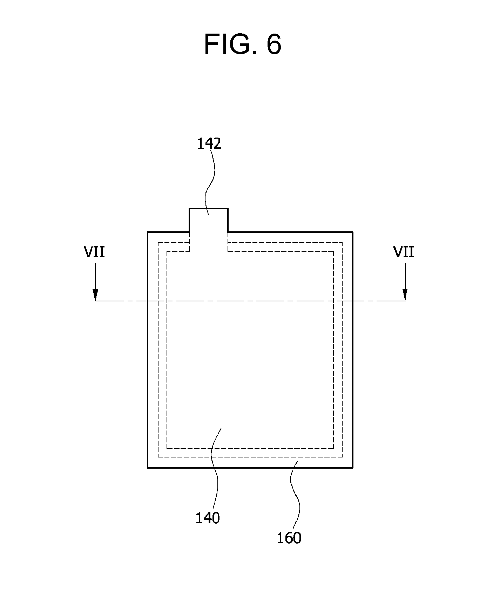

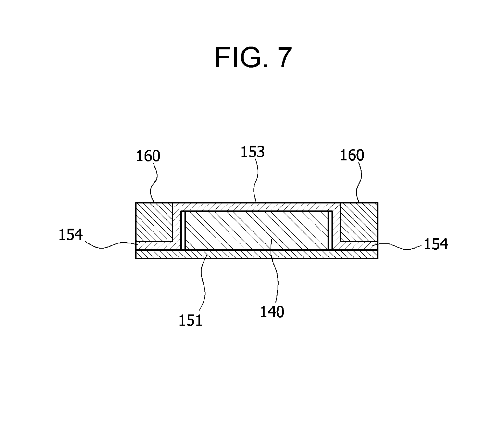

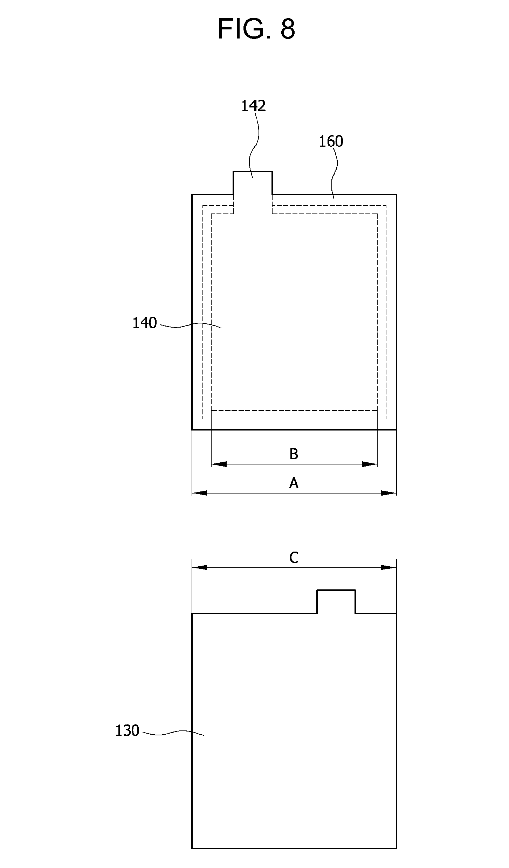

FIG. 1 is an exploded perspective view schematically illustrating a secondary battery including a wrapping electrode assembly according to an exemplary embodiment of the present invention, FIG. 2 is a perspective view illustrating the wrapping electrode assembly according to the exemplary embodiment of the present invention, FIG. 3 to FIG. 5 are diagrams illustrating a process for manufacturing a wrapping electrode assembly according to an exemplary embodiment of the present invention, FIG. 6 is a plane view illustrating the wrapping electrode assembly according to the exemplary embodiment of the present invention, FIG. 7 is a cross-sectional view taken along a line VII-VII of FIG. 6, and FIG. 8 is a diagram provided to compare the wrapping electrode assembly according to the exemplary embodiment of the present invention with a non-wrapped electrode plate.

According to an exemplary embodiment of the present invention, a secondary battery 100 includes a lithium ion secondary battery but is not limited to the lithium ion secondary battery. Hereinafter, for convenience in explanation, there will be described a case where the secondary battery 100 according to the exemplary embodiment of the present invention is a lithium ion secondary battery.

Referring to FIG. 1, the secondary battery 100 according to the exemplary embodiment of the present invention may include a can 120 configured to accommodate an electrode assembly and a cap 110 configured to seal the can 120. The cap 110 and the can 120 are made of a metallic material such as stainless steel, and the can 120 may include a space for accommodating the electrode assembly and a space for accommodating electrode taps 132 and 142. In FIG. 1, the secondary battery 100 is illustrated as a large battery having a large capacity with a slim and wide area. However, the secondary battery according to the present invention may include coin type or button type small batteries. That is, a wrapping electrode assembly group 150 to be described below can be applied to all of large batteries and small batteries.

The electrode assembly accommodated in the can 120 may be formed by alternately stacking multiple wrapping electrode assemblies 150 and multiple non-wrapped electrode plates 130 (hereinafter, referred to as "bare electrode plates"). Herein, the wrapping electrode assemblys 150 may be referred to as "pocketing electrode plates".

In FIG. 1, a single wrapping electrode assembly 150 and a single bare electrode plate 130 are illustrated for convenience. However, actually, the multiple wrapping electrode assemblies 150 and the multiple bare electrode plates 130 are laminated or stacked alternately so as to form the electrode assembly.

Although not illustrated, the multiple wrapping electrode assemblies 150 are laminated or stacked such that non-coated protruding portions 142 are overlapped with each other, and the multiple bare electrode plates 130 are also laminated or stacked such that non-coated protruding portions 132 are overlapped with each other. The non-coated protruding portions 142 of the wrapping electrode assemblies 150 are connected to each other and the non-coated protruding portions 132 of the bare electrode plates 130 are connected to each other so as to be connected to an external terminal.

Meanwhile, as illustrated in FIG. 2, the wrapping electrode assembly 150 according to the exemplary embodiment of the present invention for use in the lithium ion secondary battery 100 manufactured by an electrode-stacking method may include: an electrode plate 140 which has a coating layer of an electrode active material and the non-coated protruding portion 142, the electrode active material being capable of reversibly inserting and extracting lithium ions; a first separator 151 and a second separator 153 which cover both surfaces of the electrode plate 140 while exposing only the non-coated protruding portion 142; and an insulating polymer film 160 which is placed on any one outer surface of the first separator 151 and the second separator 153 at least on a portion of a circumference of the electrode plate 140 to bond the first separator 151 and the second separator 153.

With this configuration, it is not necessary for both surfaces of the insulating polymer film 160 to contain an adhesive component.

The both surfaces of the electrode plate 140 constituting the wrapping electrode assembly 150 according to the exemplary embodiment of the present invention are coated with the electrode active material. The electrode active material are coated on most of the both surfaces of the electrode plate 140 so as to form the coating layer of the electrode active material, but the non-coated protruding portion 142 is not coated with the active material.

The both surfaces of the electrode plate 140 coated with the active material may be covered by the two separators, that is, the first separator 151 and the second separator 153. In this case, at least a part of an edge of the first separator 151 and the second separator 153 may be bonded to each other. For example, the first and second separators 151 and 153 may be bonded to each other so as to wrap at least one of the other three edges of the electrode plate 140 except the edge where the non-coated protruding portion 142 is formed.

The first separator 151 and the second separator 153 may be bonded to each other via the insulating polymer film 160. The first separator 151 and the second separator 153 may be bonded or attached to each other by the insulating polymer film 160 which may be present on any one outer surface of the first separator 151 or the second separator 153 rather than between the first separator 151 and the second separator 153.

The electrode plate 140 is positioned between the first separator 151 and the second separator 153. In this case, assuming that surfaces of the first separator 151 and the second separator 153 facing the electrode plate 140 are inner surfaces and the other surfaces are outer surfaces, the insulating polymer film 160 is positioned on any one outer surface of the first separator 151 or the second separator 153. In other words, it can be said that the first separator 151 and the second separator 153 are bonded by the insulating polymer film 160 which is not between the separators but outside the separators.

Preferably, the insulating polymer film 160 is provided only to a portion where the first separator 151 and the second separator 153 are bonded to each other so as to wrap the edges of the electrode plate 140. For example, if the first separator 151 and the second separator 153 are bonded to each other so as to wrap at least one of the three edges of the electrode plate 140 except the edge where the non-coated protruding portion 142 is formed, the insulating polymer film 160 is provided only to an outer surface of a portion where the first separator 151 and the second separator 153 are bonded to each other.

Meanwhile, at least one of the first separator 151 or the second separator 153 may include a bending portion 154 at a part of an edge. In FIG. 2, the bending portions 154 are formed only at the edges of the second separator 153. However, the bending portion may be formed only at the edges of the first separator 151 rather than the second separator 153 and if necessary, the bending portion may be formed at the edges of both of the first separator 151 and the second separator 153. Hereinafter, for convenience in explanation, there will be described a case where the bending portions 154 are formed at the edges of the second separator 153.

As illustrated in FIG. 2, the first separator 151 and the second separator 153 are formed to be larger than the electrode plate 140, and the electrode plate 140 is thicker than the first separator 151 and the second separator 153. Therefore, in order for the insulating polymer film 160 to be positioned on the outer surface of the edge of the second separator 153, the bending portions 154 need to be formed at the edges of the second separator 153. The insulating polymer film 160 may be formed so as to be positioned on the bending portions 154.

The bending portion 154 may be formed into a step shape at the edge of the second separator 153. An inner surface of the bending portion 154 is bonded to the first separator 151 and an outer surface thereof is brought into contact with the insulating polymer film 160.

Herein, the insulating polymer film 160 may contain an adhesive component, or the insulating polymer film 160's surface in contact with the bending portion 154 may be coated with the adhesive component. While the insulating polymer film 160 is heated to bond the first separator film 151 and the second separator 153, the adhesive component passes through the second separator 153 and infiltrates into a surface where the first separator 151 and the second separator 153 are in contact with each other, and, thus, the separators are bonded to each other.

As such, the insulating polymer film 160 contains an adhesive component for bonding the first separator 151 and the second separator 153, and the adhesive component infiltrates into the first separator 151 or the second separator 153 and thus bonds the first separator 151 to the second separator 153.

Meanwhile, preferably, the insulating polymer film 160 may be formed so as not to be protruded beyond the bending portion 154 or so as not to be protruded beyond the second separator 153 including the bending portion 154.

Referring to FIG. 2 and FIG. 7, a height of the insulating polymer film 160 placed on the bending portion 154 should not be greater than a height of the second separator 153 which coats an upper surface of the electrode plate 140. If the insulating polymer film 160 is formed to be higher than an upper surface or an upper end of the second separator 153, the wrapping electrode assembly 150 and the bare electrode plate 130 cannot be closely laminated or stacked, which may cause deterioration in the performance of the secondary battery.

In the wrapping electrode assembly 150 according to the exemplary embodiment of the present invention, a thickness of the insulating polymer film 160 does not need to be equivalent to a thickness of the electrode plate 140, and even if the thickness of the insulating polymer film 160 is smaller than the thickness of the electrode plate 140, the wrapping electrode assembly 150 and the bare electrode plate 130 can be easily laminated or stacked using the upper surface of the electrode plate 140.

Further, an edge end of the insulating polymer film 160 placed on the bending portion 154 should not be further protruded than an edge end of the bending portion 154 or the first separator 151. If the edge end of the insulating polymer film 160 is further protruded than the edge end of the bending portion 154, alignment faults may occur while the wrapping electrode assembly 150 and the bare electrode plate 130 are laminated or stacked, and the performance of the secondary battery may deteriorate.

As illustrated in FIG. 8, a width A of the wrapping electrode assembly 150 is equivalent to a width C of the bare electrode plate 130. Therefore, if the wrapping electrode assembly 150 and the bare electrode plate 130 are laminated or stacked while matching both ends of the wrapping electrode assembly 150 in a widthwise direction with both ends of the bare electrode plate 130 in a widthwise direction, the wrapping electrode assembly 150 and the bare electrode plate 130 are naturally in alignment. Therefore, in order to increase convenience in stacking and secure the alignment of the wrapping electrode assembly 150 and the bare electrode plate 130, the edge end of the insulating polymer film 160 placed on the bending portion 154 should not be further protruded than the edge end of the bending portion 154 or the first separator 151.

Referring to FIG. 8, the electrode plate 140 coated by the first separator 151 and the second separator 153 may be formed to have a size B smaller than a size C of another electrode plate 130 which is not coated by the first separator 151 and the second separator 153. That is, the width B of the electrode plate 140 constituting the wrapping electrode assembly 150 may be smaller than the width C of the bare electrode plate 130. In other words, if the secondary battery 100 is manufactured by the electrode-stacking method, preferably, a size of the wrapping electrode assembly 150 may not be smaller than a size of the bare electrode plate 130 and an area of the bare electrode plate 130 may be greater than a coating area of an active material on the electrode plate 140 of the wrapping electrode assembly 150 in order to prevent edge mismatch between active surfaces of the wrapping electrode assembly 150 and the bare electrode plate 130 and to maintain a smooth stacking alignment.

The first separator 151 or the second separator 153 constituting the wrapping electrode assembly 150 may be formed to have the maximum projected area so as to be equivalent to that of the another electrode plate 130. If the edge of the wrapping electrode assembly 150 is matched with the edge of the bare electrode plate 130, an projected area of the first separator 151 or the second separator 153 constituting the wrapping electrode assembly 150 is equivalent to that of the bare electrode plate 130.

Meanwhile, preferably, a thickness of the insulating polymer film 160 may be greater than a thickness of the first separator 151 or the second separator 153 but not greater than a thickness of the electrode plate 140.

The insulating polymer film 160 constituting the wrapping electrode assembly 150 may include any one selected from the group consisting of a polyolefin resin film, a polyester resin film, a polystyrene resin film, a polyimide film, a polyamide film, a fluorocarbon resin film, an ABS film, a polyacrylic film, an acetal-based film, and a polycarbonate film.

Further, preferably, the insulating polymer film 160 may contain any one adhesive component selected from a high temperature fused adhesive group consisting of ethylene vinyl acetate, ethylene ethyl acetate, an ethylene acrylic acid-based compound, an ionomer-based compound, polyethylene, polyvinylacetate, and polyvinylbutyral.

Hereinafter, there will be described a method for manufacturing a wrapping electrode assembly according to an exemplary embodiment of the present invention.

According to another aspect of the present invention, the present invention may provide a method for manufacturing a wrapping electrode assembly 150 for use in a lithium ion secondary battery manufactured by an electrode-stacking method, the method including: a step of preparing a plurality of electrode plates 140 having the same shape, each of which has a coating layer of an electrode active material and a non-coated protruding portion 142, the electrode active material being capable of reversibly inserting and extracting lithium ions; a step of removing a part of a tape-shaped insulating polymer film 160 containing an adhesive component in order to form a space 163 where the electrode plates 140 are accommodated as being aligned with a uniform gap; a step of positioning the electrode plates 140 between tape-shaped first separator 151 and second separator 153 so as to expose only the non-coated protruding portions 142 of the electrode plates 140 and coat the other portions of the electrode plates 140; a step of aligning the electrode plates 140 with a uniform gap within a punched space 163 of the insulating polymer film 160; a step of allowing the insulating polymer film 160 and the separators 151 and 153 to pass through a pressure roller 200 while heating the insulating polymer film 160 and the separators 151 and 153; and a step of obtaining a plurality of wrapping electrode assemblies 150 in which the first separator 151 and the second separator 153 are bonded by the insulating polymer film 160 at least on a part of an outer circumference of the electrode plate 140.

After the step of preparing the plurality of electrode plates 140 having the same shape, each of which has the coating layer of the electrode active material and the non-coated protruding portion 142, the electrode active material being capable of reversibly inserting and extracting lithium ions, the step of removing a part of the tape-shaped insulating polymer film 160 containing an adhesive component in order to form the space 163 where the electrode plates 140 are accommodated as being aligned with a uniform gap may be performed.

As illustrated in FIG. 3, the insulating polymer film 160 has a tape shape and includes the punched spaces 163 in the middle of the insulating polymer film 160 along a longitudinal direction with a uniform gap. The punched space 163 is a space for accommodating the electrode plates 140 and the first and second separators 151 and 153 constituting the wrapping electrode assembly 150. Preferably, a width or a size of the punched space 163 may be slightly greater than a width of the electrode plate 140.

Then, the step of positioning the electrode plates 140 between the tape-shaped first separator 151 and second separator 153 so as to expose only the non-coated protruding portions 142 of the electrode plates 140 and coat the other portions of the electrode plates 140 and the step of aligning the electrode plates 140 with a uniform gap within the punched space 163 of the insulating polymer film 160 may be performed.

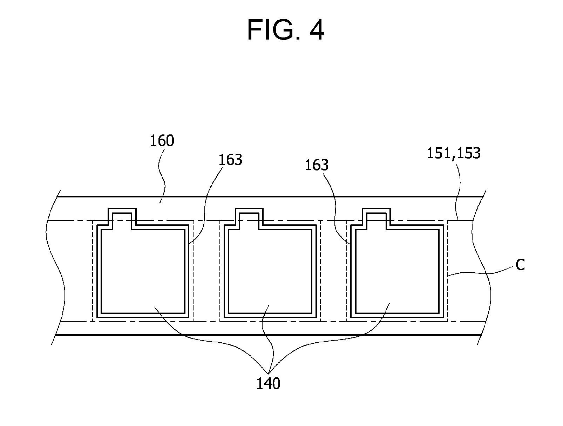

As illustrated in FIG. 3, while the insulating polymer film 160, the second separator 153, the electrode plate 140, and the first separator 151 are laminated or stacked in sequence, if the insulating polymer film 160 is pressed down from the top, the second separator 153 as well as the electrode plate 140 is introduced into the punched space 163. In this process, a bending portion 154 is formed at an edge of the second separator 153 and the insulating polymer film 160 is placed on the bending portion 154. Through this process, an approximately central portion of the second separator 153 including the bending portion 154 is combined with the punched space 163 formed in the insulating polymer film 160. FIG. 4 illustrates such a state as viewed from the top.

Referring to FIG. 4, the insulating polymer film 160 has the greatest width, and a width d of the first separator 151 or the second separator 153 is smaller than the width of the insulating polymer film 160. Preferably, a lower end of the first or second separator 151 and 153 may be longer than a lower end of the electrode plate 140, and an upper end thereof may be positioned between an upper end of the electrode plate 140 and the non-coated protruding portion 142.

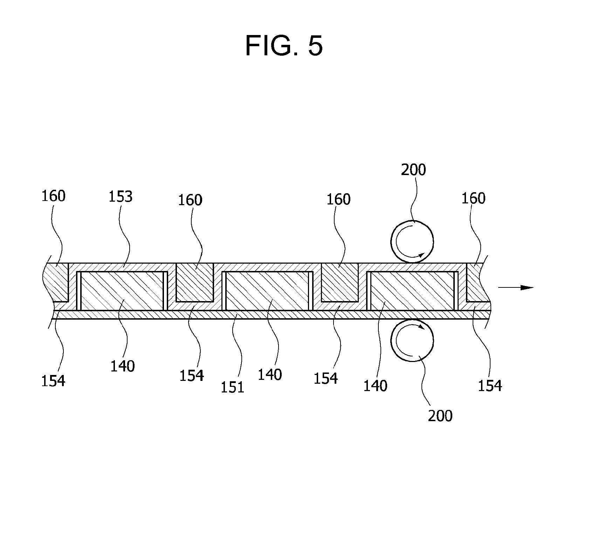

The step of allowing the insulating polymer film 160 and the separators 151 and 153 to pass through the pressure roller 200 while heating the insulating polymer film 160 and the separators 151 and 153 may be performed as illustrated in FIG. 5. When the second separator 153 and the electrode plate 140 are introduced into the punched space 163 of the insulating polymer film 160, the first separator 151 and the second separator 153 can be bonded by heating while pressing the upper surface and the lower surface by the pressure roller 200. In this case, the adhesive component contained in the insulating polymer film 160 infiltrates into the first separator 151 and the second separator 153 and enables the first separator 151 and the second separator 153 to be bonded to each other.

The step of obtaining the plurality of wrapping electrode assemblies 150 in which the first separator 151 and the second separator 153 are bonded by the insulating polymer film 160 at least on a part of the outer circumference of the electrode plate 140 is a step of cutting the strucutre bonded by the pressure roller 200 into uniform pieces. For example, the bonded structure may be cut along a line C illustrated in FIG. 5 so as to be matched with the upper and lower ends of the first and second separators 151 and 153, and, thus, the wrapping electrode assembly 150 illustrated in FIG. 6 can be obtained.

Herein, the insulating polymer film 160 may include any one selected from the group consisting of a polyolefin resin film, a polyester resin film, a polystyrene resin film, a polyimide film, a polyamide film, a fluorocarbon resin film, an ABS film, a polyacrylic film, an acetal-based film, and a polycarbonate film.

Further, the insulating polymer film 160 may contain any one adhesive component selected from a high temperature fused adhesive group consisting of ethylene vinyl acetate, ethylene ethyl acetate, an ethylene acrylic acid-based compound, an ionomer-based compound, polyethylene, polyvinylacetate, and polyvinylbutyral.

An electrode assembly is manufactured by alternately stacking the multiple wrapping electrode assemblies 150 and bare electrode plates 130 prepared by the above-described method, and then put into a can 120 and sealed with a cap 110, so that a secondary battery can be obtained.

Meanwhile, preferably, the electrode plate 140 constituting the wrapping electrode assembly 150 may be a cathode electrode plate and the bare electrode plate 130 may be an anode electrode plate, but may not be limited thereto. If an anode electrode plate is allowed to be greater than a cathode electrode plate, the wrapping electrode assembly may be an anode electrode plate and the bare electrode plate may be a cathode electrode plate.

As described above, according to the wrapping electrode assembly and the method for manufacturing the same of the exemplary embodiments of the present invention, the insulating polymer film for bonding the separators to each other is not positioned between the separators. Thus, it is not necessary to coat the adhesive component on the both surfaces of the insulating polymer film, and a thickness of the insulating polymer film is not limited to be equivalent to a thickness of the electrode plate.

While the exemplary embodiments of the present invention have been described above with reference to specific matters such as the concrete elements and the definitive embodiments and drawings, these exemplary embodiments are provided only for the general understanding of the present invention but not intended to limit the present invention. It should be noted by those skilled in the art that various modifications and changes can be made from the above description. Therefore, the concept of the present invention should not be limited to the above-described exemplary embodiments, but the following claims and all equivalents or modifications thereof will be construed as being included in the scope of the concept of the present invention.

The present invention can be used in secondary batteries, energy storage systems, or the like.

## Claims

1. A wrapping electrode assembly for use in a secondary battery manufactured by an electrode-stacking method, the wrapping electrode assembly comprising:
an electrode plate which has a coating layer of an electrode active material and a non-coated protruding portion, the electrode active material being capable of reversibly inserting and extracting lithium ions;
first and second separators which cover both surfaces of the electrode plate while exposing only the non-coated protruding portion; and
an insulating polymer film which is placed on any one outer surface of the first separator and the second separator at least on a portion of a circumference of the electrode plate to bond the first separator and the second separator.

2. The wrapping electrode assembly of claim 1, wherein at least one of the first separator or the second separator includes a bending portion at a part of an edge.

3. The wrapping electrode assembly of claim 2, wherein the insulating polymer film is formed so as to be positioned on the bending portion.

4. The wrapping electrode assembly of claim 2, wherein the insulating polymer film is formed so as not to be protruded beyond the bending portion or so as not to be protruded beyond the separator including the bending portion.

5. The wrapping electrode assembly of claim 2, wherein the insulating polymer film contains an adhesive component that bonds the first separator and the second separator, and the adhesive component infiltrates into the first separator or the second separator and thus bonds the first separator and the second separator.

6. The wrapping electrode assembly of claim 2, wherein the electrode plate coated by the first separator and the second separator is formed to have a size smaller than that of another electrode plate which is not coated by the first separator and the second separator.

7. The wrapping electrode assembly of claim 6, wherein the first separator or the second separator is formed to have the maximum projected area so as to be equivalent to that of the another electrode plate.

8. The wrapping electrode assembly of any one of claim 1 to claim 7, wherein the insulating polymer film includes any one selected from the group consisting of a polyolefin resin film, a polyester resin film, a polystyrene resin film, a polyimide film, a polyamide film, a fluorocarbon resin film, an ABS film, a polyacrylic film, an acetal-based film, and a polycarbonate film.

9. The wrapping electrode assembly of claim 8, wherein the insulating polymer film contains any one adhesive component selected from a high temperature fused adhesive group consisting of ethylene vinyl acetate, ethylene ethyl acetate, an ethylene acrylic acid-based compound, an ionomer-based compound, polyethylene, polyvinylacetate, and polyvinylbutyral.

10. A method for manufacturing a wrapping electrode assembly for use in a secondary battery manufactured by an electrode-stacking method, the method comprising:
a step of preparing a plurality of electrode plates having the same shape, each of which has a coating layer of an electrode active material and a non-coated protruding portion, the electrode active material being capable of reversibly inserting and extracting lithium ions;
a step of removing a part of a tape-shaped insulating polymer film containing an adhesive component in order to form a space where the electrode plates are accommodated as being aligned with a uniform gap;
a step of positioning the electrode plates between tape-shaped first separator and second separator so as to expose only non-coated protruding portions of the electrode plates and coat the other portions of the electrode plates;
a step of aligning the electrode plates with a uniform gap within a punched space of the polymer film;
a step of allowing the insulating polymer film and the separators to pass through a pressure roller while heating the insulating polymer film and the separators; and
a step of obtaining a plurality of wrapping electrode assemblys in which the first separator and the second separator are bonded by the insulating polymer film at least on a part of an outer circumference of the electrode plate.

11. The method of claim 10, wherein the insulating polymer film includes any one selected from the group consisting of a polyolefin resin film, a polyester resin film, a polystyrene resin film, a polyimide film, a polyamide film, a fluorocarbon resin film, an ABS film, a polyacrylic film, an acetal-based film, and a polycarbonate film.

12. The method of claim 11, wherein the insulating polymer film contains any one adhesive component selected from a high temperature fused adhesive group consisting of ethylene vinyl acetate, ethylene ethyl acetate, an ethylene acrylic acid-based compound, an ionomer-based compound, polyethylene, polyvinylacetate, and polyvinylbutyral.
